# EUROPÄISCHE PATENTSCHRIFT

(11) **EP 0 762 256 B1**
(45) Veröffentlichungstag und Bekanntmachung des Hinweises auf die Patenterteilung: **31.10.2001**
(21) Anmeldenummer: 96112691.9
(22) Anmeldetag: 07.08.1996
(51) Int. Cl.: G05D 7/01, F04C 15/04, B62D 5/06

(54) **Stromregelventil**
Flow control valve
Soupape de régulation de débit

(30) Priorität: 14.08.1995 DE 19529805; 06.10.1995 DE 19537174
(43) Veröffentlichungstag der Anmeldung: 12.03.1997
(73) Patentinhaber: LuK Fahrzeug-Hydraulik GmbH & Co. KG, 61352 Bad Homburg (DE)
(72) Erfinder: Körtge, Randolf, 61520 Usingen (DE)
(74) Vertreter: Gleiss, Alf-Olav, Dr.jur. Dipl.-Ing.

(56) Entgegenhaltungen:
- EP-A- 0 026 586
- DE-A- 2 652 707
- DE-A- 3 708 817
- DE-A- 4 413 190
- US-A- 2 916 041
- US-A- 4 546 786

## Beschreibung

Die Erfindung betrifft einen Stromregler für eine Pumpe, insbesondere Flügelzellenpumpe gemäß Oberbegriff des Anspruchs 1.

Stromregler der hier angesprochenen Art sind bekannt aus z.B. DE-A-4 413 190. Sie dienen dazu, den von der Pumpe gelieferten Förderstrom zu regeln, um einen Verbraucher mit einem bestimmten Volumenstrom zu versorgen. Die Stromregler weisen dazu einen mit dem Pumpendruck beaufschlagten Steuerkolben auf, der mit einer dem Druck entgegenwirkenden Vorspannkraft beaufschlagt wird und eine mit einer Abströmbohrung zusammenwirkende Steuerkante sowie -zur Ausbildung einer vom Kolbenweg abhängigen Förderstromdrossel- einen eine Blende durchdringenden Fortsatz aufweist. Die Förderstromdrossel dient dazu, den an einen Verbraucher gelieferten Fluidstrom bei unterschiedlichen Förderleistungen der Pumpe im wesentlichen konstant zu halten. Falls eine zu große Druckkraft auf den Steuerkolben wirkt, wird dieser gegen die Vorspannkraft soweit verlagert, bis seine Steuerkante eine Verbindung zu einer Abströmbohrung freigibt, durch die der von der Pumpe gelieferte Fluidstrom abfließen kann.

Die Funktion des Stromreglers ist an sich bekannt, so daß hier nicht näher darauf eingegangen werden soll.

Wegeabhängige Förderstromdrosseln in Verbindung mit dem Stromregler der hier angesprochenen Art zeichnen sich dadurch aus, daß der Volumenstrom für verschiedene Lastdruckwerte über der Drehzahl stark variiert. Es ergibt sich daher ein weitgefächertes Kennlinienfeld für den Volumenstrom Q über der Pumpendrehzahl n für verschiedene, an den Verbraucher angelegte Lastdruckwerte.

Es ist Aufgabe der Erfindung, einen Stromregler zu schaffen, der eine nur wenig aufgefächerte Kennlinie für den über der Drehzahl n aufgetragenen Volumenstrom Q für verschiedene Lastdruckwerte aufweist.

Die Aufgabe wird erfindungsgemäß durch die im Anspruch 1 genannten Merkmale gelöst.

Der Stromregler zeichnet sich dadurch aus, daß die mindestens zwei Bereiche durch eine scharfkantige Stufe voneinander getrennt sind, wobei die Stufe und die Blende so aufeinander abgestimmt sind, daß die Steuerkante des Steuerkolbens gerade die Abströmbohrung tangiert, wenn die Stufe innerhalb der Blende angeordnet ist. Durch diese -in axialer Richtung gesehene- Anordnung von Stufe und Blende wird sichergestellt, daß die Auffächerung der Kennlinien bereits bei relativ geringen Drehzahlen weitgehend unterbunden wird.

Bevorzugt wird ein Ausführungsbeispiel des Stromreglers, bei dem die Blende eine sehr geringe -in axialer Richtung des Steuerkolbens des Stromreglers gemessene- Breite aufweist. Diese Ausgestaltung führt zu einer weiteren Verminderung der Streuung der genannten Kennlinien.

Die Erfindung wird im folgenden anhand der Zeichnung näher erläutert. Es zeigen:
- Figur 1: ein Detail eines Stromreglers im Längsschnitt;
- Figur 2: ein sogenanntes Q/n-Kennlinienfeld für eine mit einem Stromregler gemäß Figur 1 ausgestattete Pumpe und
- Figur 3: ein Q/n-Kennlinienfeld eines herkömmlichen wegeabhängigen Stromreglers.

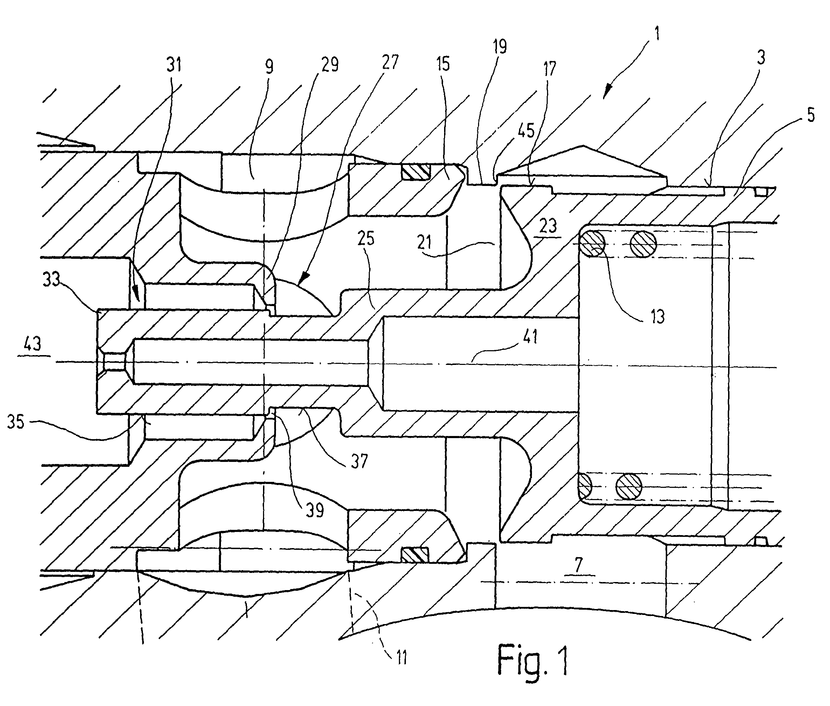

Die Schnittdarstellung gemäß Figur 1 zeigt ein Detail eines Stromreglers 1 im Längsschnitt, der einen in einer Bohrung 3 geführten Steuerkolben 5 umfaßt, der -in seiner Ruhestellung- eine mit dem Tank einer Pumpe, insbesondere Flügelzellenpumpe, verbundene Abströmbohrung 7 gegenüber einem Druckraum 9 verschließt, der über eine gestrichelt angedeutete Druckleitung 11 mit der Förderseite beziehungsweise Druckseite einer Pumpe verbunden ist. Der Steuerkolben 5 wird einerseits mit dem im Druckraum 9 herrschenden Druck beaufschlagt, der gemäß Figur 1 eine von rechts nach links wirkende Druckkraft auf den Steuerkolben 5 ausübt. Dieser Druckkraft wirkt eine Schraubenfeder 13 entgegen, die eine Vorspannkraft auf den Steuerkolben 5 ausübt, die diesen im drucklosen Zustand nach links gegen einen Anschlag 15 preßt. In dieser Stellung schließt der Steuerkolben 5 die Abströmbohrung 7, die in die Bohrung 3 des Stromreglers 1 mündet, mit einer radialen Dichtfläche 17, die mit einem radialen Dichtbereich 19 der Bohrung 3 zusammenwirkt. Es wird hier also ein Schieberventil ausgebildet. Bei dem hier dargestellten Ausführungsbeispiel liegt dabei zusätzlich eine Steuerkante 21 des Steuerkolbens 5 an dem Anschlag 15 an, wobei hier eine Sitzdichtung beziehungsweise ein Sitzventil ausgebildet wird.

Von dem Grundkörper 23 des Steuerkolbens 5 geht ein den Druckraum 9 durchdringender Fortsatz 25 aus, der zur Ausbildung einer wegeabhängigen Förderstromdrossel 27 durch eine Blende 29 geführt ist. Die Außenfläche 31 des Fortsatzes 25 weist zwei Bereiche mit unterschiedlichen Außendurchmessern auf, wobei an dem freistehenden, distalen Ende 33 des Fortsatzes 25 ein erster Abschnitt 35 vorgesehen ist, dessen Durchmesser größer ist als der eines näher am Grundkörper 23 liegenden zweiten Abschnitts 37. Der erste Abschnitt 35 geht über eine scharfkantige Stufe 39 in den zweiten Abschnitt 37 über, wobei der erste Abschnitt 35 im Bereich der Stufe 39 hier senkrecht, das heißt in radialer Richtung zur Mittelachse 41 des Steuerkolbens 5 zum zweiten Abschnitt 37 abfällt. Es ist auch möglich, daß der erste Abschnitt 35 über eine sehr kurze, unter einem Winkel von > 90° verlaufende Schrägfläche oder Rampe in den zweiten Abschnitt 37 übergeht. Die axiale Erstreckung der Schrägfläche oder Rampe beträgt vorzugsweise nur ca. 1 mm.

Der Außendurchmesser des ersten Abschnitts 35 ist etwas kleiner als der Innendurchmesser der Blende 29, so daß eine freie Ringfläche ausgebildet wird, wenn der erste Abschnitt 35 im Bereich der Blende 29 angeordnet ist. Durch diese Ringfläche gelangt ein von der Pumpe in den Druckraum 29 gefördertes Fluid in einen Abgabebereich 43, an den eine Verbindungsleitung für einen von der Pumpe versorgten Verbraucher angeschlossen ist.

Aus der Darstellung gemäß Figur 1 ist ersichtlich, daß die in axialer Richtung gemessene, das heißt in Richtung der Mittelachse 41 gemessene Breite der Blende 29 sehr klein gewählt ist. Die Blende 29 ist also ebenfalls sehr scharfkantig ausgebildet, so daß quasi eine Schneide gegeben ist.

Der in axialer Richtung gemessene Abstand der Stufe 39 zur Steuerkante 21 ist so auf den Abstand der Blende 29 auf die im Druckraum 9 zugewandte Kante 45 der Abströmbohrung 7 abgestimmt, daß die Stufe 39 innerhalb der Blende 29 angeordnet ist, während die Steuerkante 21 des Steuerkolbens 5 gerade die Abströmbohrung 7 tangiert, also die Kante 45 berührt.

Wenn nach allem im Druckraum 9 kein oder nur ein geringer Druck herrscht, wird der Steuerkolben 5 durch die Vorspannkraft der Schraubenfeder 13 nach links gegen den Anschlag 15 gedrängt. In dieser Stellung wird der Druckraum 9 durch das von dem Anschlag 15 und der Steuerkante 21 gebildete Sitzventil von der Abströmbohrung 7 getrennt. In dieser Stellung befindet sich der zweite Abschnitt 37, der einen geringeren Außendurchmesser als der erste Abschnitt 35 aufweist, im Bereich der Blende 29, so daß eine relativ große Ringfläche freigelassen wird und ein in den Druckraum 9 gefördertes Fluid durch diese Ringfläche in den Abgabebereich 43 gelangen kann.

Wenn bei steigender Drehzahl oder bei erhöhtem Gegendruck des Verbrauchers der Druck im Druckraum 9 steigt, wird der Steuerkolben 5 gegen die Vorspannkraft der Schraubenfeder 13 nach rechts verlagert, so daß die Steuerkante 21 einen Abstand zum Anschlag 15 aufweist. Dabei bleibt der Druckraum 9 durch das Zusammenwirken der Dichtfläche 17 mit dem Dichtbereich 19 von der Abströmbohrung 7 abgetrennt, wobei hier eine radiale Dichtung beziehungsweise Schieberdichtung gegeben ist.

Auch bei einer Verlagerung des Steuerkolbens 5 nach rechts bleibt zunächst der zweite Abschnitt 37 im Bereich der Blende 29 angeordnet, so daß sich aufgrund des erhöhten Drucks bei gleichbleibender Ringfläche ein größerer Förderstrom zum Verbraucher einstellt.

Steigt der Druck im Druckraum 9 weiter an, wird der Steuerkolben 5 weiter nach rechts verlagert, damit auch der starr mit diesem verbundene Fortsatz 25. Schließlich erreicht die Steuerkante 21 des Steuerkolbens die Kante 45 der Abströmbohrung 7. Durch die Abstimmung der axialen Anordnung der Stufe 39 gegenüber der Blende 29 erreicht die Stufe 39 die Blende 29 gerade dann, wenn die Steuerkante 21 die Kante 45 erreicht. In dem Moment also, in dem öl aus dem Druckraum in die Abströmbohrung 7 abströmen kann, wodurch eine weitere Erhöhung des Drucks im Druckraum 9 zunächst verhindert wird, erreicht auch die Stufe 39 die Blende 29, so daß der Abströmquerschnitt der Förderstromdrossel 27 abrupt reduziert wird. Das im Druckraum 9 vorhandene Fluid kann nun nämlich nur noch durch die kleinere Ringfläche, die zwischen dem ersten Abschnitt 35 und der Innenfläche der Blende 29 freigeblieben ist, in den Abgabebereich 43 strömen.

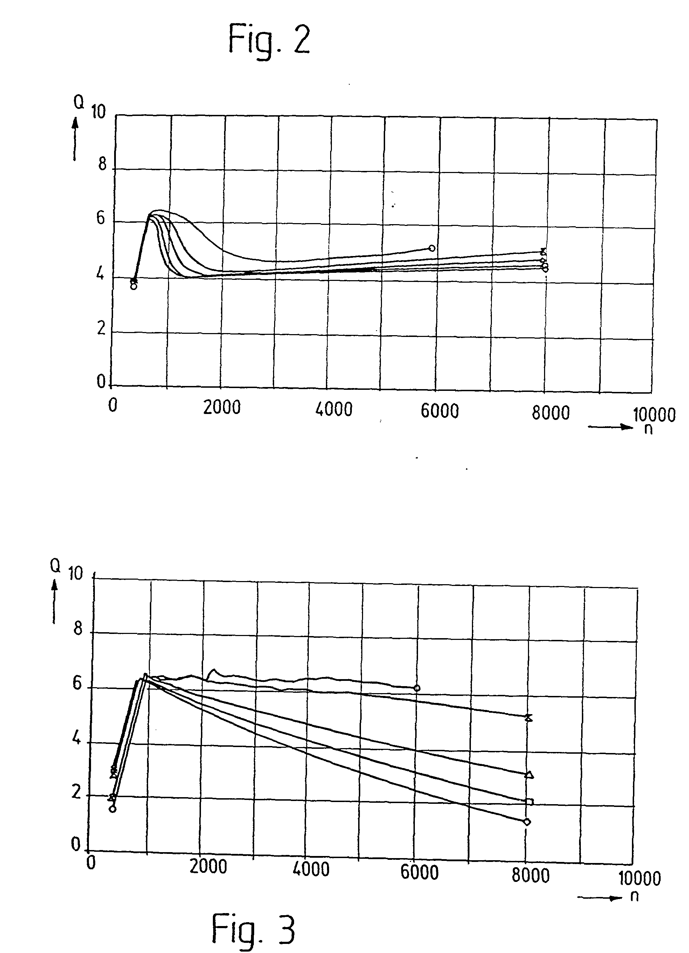

Durch das Zusammenspiel der Stufe 39 mit der Blende 29 und der Steuerkante 21 mit der Kante 45 wird erreicht, daß eine Auffächerung der Q/n-Kennlinien stark reduziert wird. Dies ergibt unmittelbar einen Vergleich der Figuren 2 und 3.

Figur 2 zeigt ein Kennlinienfeld, in dem ein Volumenstrom Q einer Pumpe über deren Drehzahl n für verschiedene Lastdruckwerte eingetragen sind. Die unterste Kurve ist für einen Lastdruck von 3 bar aufgenommen; die darüberliegenden für 5 bar, 10 bar, 20 bar und 50 bar. Deutlich ist erkennbar, daß der Volumenstrom Q auch bei einer Zunahme der Drehzahl n in einem Bereich oberhalb von ca. 2.500 Umdrehungen für verschiedene Lastdruckwerte kaum noch variiert.

Vergleicht man dies mit den in Figur 3 wiedergegebenen Q/n-Kennlinien eines herkömmlichen wegeabhängigen Stromreglers, so zeigt sich, daß dort die Volumenströme für verschiedene Lastdruckwerte stark voneinander abweichen, das heißt, aufgefächert sind. In dem Kennlinienfeld von Figur 3 ist ebenfalls die unterste Kurve für einen Lastdruck von 3 bar aufgenommen; die darüberliegenden für 5, 10, 20 und 50 bar.

Gerade der Vergleich der Q/n-Kennlinien der Figuren 2 und 3 läßt die besondere Wirkung der speziellen Ausgestaltung des Stromreglers 1 erkennen. Es ergibt sich für den hier beschriebenen wegeabhängigen Stromregler ein Kennlinienfeld, wie es sonst nur bei staudruckabhängigen Stromreglern gegeben ist, die nur mit zahlreichen zusätzlichen Teilen und damit nur mit hohen Kosten realisierbar sind.

## Patentansprüche

1. Stromregler (1) für eine Pumpe, insbesondere Flügelzellenpumpe, der den von der Pumpe an einen Verbraucher gelieferten Fluidstrom regelt und einen einerseits mit dem von der Pumpe aufgebauten Druck beaufschlagten Steuerkolben (5) aufweist, der andererseits mit einer diesem Druck entgegenwirkenden Vorspannkraft beaufschlagt wird und der eine mit einer Abströmbohrung (7) zusammenwirkende Steuerkante (21) und zur Ausbildung einer vom Kolbenweg abhängigen Förderstromdrossel (27) einen eine Blende (29) durchdringenden Fortsatz (25) aufweist, wobei die Außenfläche (31) des Fortsatzes (25) des Steuerkolbens (5) mindestens zwei Bereiche (35, 37) mit verschiedenen Außendurchmessern aufweist, **dadurch gekennzeichnet, dass** die mindestens zwei Bereiche (35, 37) durch eine scharfkantige Stufe (39) voneinander getrennt sind, wobei die Stufe (39) und die Blende (29) so aufeinander abgestimmt sind, dass die Steuerkante (21) des Steuerkolbens (5) gerade die Abströmbohrung (7) tangiert, wenn die Stufe (39) innerhalb der Blende (29) angeordnet ist.

2. Stromregler nach Anspruch 1, **dadurch gekennzeichnet, daß** die Blende (29) eine sehr geringe -in axialer Richtung des Steuerkolbens (5) gemessene- Breite aufweist.

## Claims

1. A flow regulator (1) for a pump, in particular a vane-cell pump, regulating the fluid flow delivered by the pump to a consumer device and comprising a control piston (5) which is acted upon by the pressure built up by the pump on the one hand and is acted upon by a pre-stressing force counteracting this pressure on the other hand and which comprises a control edge (21) cooperating with a discharge bore (7) and an extension (25) passing through an orifice (29) in order to form a delivery-flow throttle (27) dependent upon the piston path, wherein the outer face (31) of the extension (25) of the control piston (5) comprises at least two regions (35, 37) having different external diameters, **characterized in that** the at least two regions (35, 37) are separated from each other by a sharp-edged step (39), wherein the step (39) and the orifice (29) are adapted to each other in such a way that the control edge (21) of the control piston (5) just touches the discharge bore (7) when the step (39) is situated inside the orifice (29).

2. A flow regulator according to Claim 1, **characterized in that** the orifice (29) has a very narrow width, as measured in the axial direction of the control piston (5).

## Revendications

1. Régulateur de débit (1) pour une pompe, notamment une pompe à palettes, pour réguler le débit de fluide fourni par la pompe à un utilisateur et comportant un piston de commande (5) dont un côté est sollicité par la pression de la pompe et dont l'autre côté reçoit une force de précontrainte s'opposant à cette pression, et comprenant une arête de commande (21) coopérant avec un perçage de sortie de fluide (7), et un prolongement (25) traversant un diaphragme (29), pour former un organe d'étranglement de débit (27) dépendant de la course du piston, la surface extérieure (31) du prolongement (25) du piston de commande (5) ayant au moins deux zones (35, 37) de diamètres externes différents,
**caractérisé en ce qu'**
au moins les deux zones (35, 37) sont séparées par un gradin (39) d'arête vive,
le gradin (39) et le diaphragme (29) étant réglés l'un sur l'autre pour que l'arête de commande (21) du piston de commande (5) soit juste tangent au perçage de sortie (7) lorsque le gradin (39) se trouve dans le diaphragme (29).

2. Régulateur de débit selon la revendication 1,
**caractérisé en ce que**
le diaphragme (29) présente une largeur très faible mesurée dans la direction axiale du piston de commande (5).
